Europäisches Patentamt

European Patent Office

Office européen des brevets

(11) Numéro de publication: **0 238 527**
**B1**

(12) **FASCICULE DE BREVET EUROPEEN**

(45) Date de publication du fascicule du brevet: **14.03.90**

(51) Int. Cl.⁵: **B 01 D 11/02, B 01 D 11/04**

(21) Numéro de dépôt: **86905310.8**

(22) Date de dépôt: **02.09.86**

(86) Numéro de dépôt international:
**PCT/FR86/00295**

(87) Numéro de publication internationale:
**WO 87/01299 12.03.87 Gazette 87/06**

(54) **PROCEDE ET DISPOSITIF POUR L'EXTRACTION DE CONSTITUANTS PAR UN FLUIDE SUPERCRITIQUE OU UN LIQUIDE SOUS PRESSION.**

(30) Priorité: **06.09.85 FR 8513246**

(43) Date de publication de la demande:
**30.09.87 Bulletin 87/40**

(45) Mention de la délivrance du brevet:
**14.03.90 Bulletin 90/11**

(84) Etats contractants désignés:
**DE FR GB IT**

(56) Documents cités:
**US-A-3 969 196**
**US-A-4 402 821**
**US-A-4 448 669**
**US-A-4 478 705**

(73) Titulaire: **COMMISSARIAT A L'ENERGIE ATOMIQUE**
**31/33, rue de la Fédération**
**F-75015 Paris (FR)**

(72) Inventeur: **BETHUEL, Louis**
**12, hameau de la Croix d'Or**
**F-26700 Pierrelatte (FR)**
Inventeur: **CARLES, Maurice**
**2, boulevard Laennec**
**F-26700 Pierrelatte (FR)**
Inventeur: **NEIGE, Roger**
**Route de Saint Paul**
**F-26700 Pierrelatte (FR)**

(74) Mandataire: **Mongrédien, André et al**
**c/o BREVATOME 25, rue de Ponthieu**
**F-75008 Paris (FR)**

Courier Press, Leamington Spa, England.

# EP 0 238 527 B1

**Description**

La présente invention a pour objet un procédé d'extraction de constituants par des fluides supercritiques ou des liquides sous pression.

Elle s'applique notamment à l'extraction des constituants organiques suivants:

— les parfums et huiles essentielles de fleurs ou végétaux, frais ou secs, tels que la lavande, le lavandin, la rose, la fleur d'oranger, le jasmin, le genêt, la camomille, la menthe, etc. . .

— les arômes comme ceux du vin, du tabac, du houblon, du poivre, etc. . . ,

— les produits pour la pharmacie,

— les alcaloïdes, par exemple la caféine et la nicotine du tabac,

— les colorants naturels, et

les graisses et corps gras tels que les arachides, le colza, le tournesol, etc.

Elle peut aussi être utilisée pour la séparation partielle eau-alcool et pour la récupération des résidus pétroliers, par exemple pour la séparation des asphaltènes des hydrocarbures lourds en utilisant du pentane, et pour la récupération assistée des gisements avec du méthane, de l'azote ou du gaz carbonique.

Les procédés d'extraction par des fluides supercritiques ou des liquides sous pression consistent à utiliser un fluide dans des conditions de pression et de température suffisantes pour conférer à ce fluide un pouvoir de dissolution accru vis-à-vis des constituants à extraire.

Dans le cas des fluides supercritiques, les conditions de pression et de température sont telles que la pression est supérieure à la pression critique et la température est supérieure à la température critique.

Dans le cas des liquides sous pression, les conditions de pression et de température sont telles que la pression est inférieure ou supérieure à la pression critique et que la température est inférieure à la température critique.

Aussi, dans la suite du présent texte, les termes "fluide d'extraction" signifieront qu'il s'agit d'un fluide supercritique ou d'un liquide sous pression dans les conditions de température et de pression mentionnées ci-dessus.

L'utilisation de fluides supercritiques présente certains avantages par rapport aux liquides sous pression; en effet, les fluides supercritiques ont une viscosité faible et une diffusivité élevée, ce qui conduit à des cinétiques d'extraction élevées. Les liquides sous pression sont cependant quelquefois plus intéressants car ils donnent en général une extraction plus sélective et conduisent souvent à des extraits plus purs. En revanche, les rendements d'extraction sont en général plus faibles.

Parmi les fluides susceptibles d'être utilisés dans des conditions supercritiques ou sous forme de liquides sous pression, le gaz carbonique présente de l'intérêt car il est non toxique et peu onéreux; par ailleurs, sa pression et sa température critiques sont peu élevées puisqu'elles correspondent respectivement à 7,3 MPa et 31°C. Aussi, il est particulièrement intéressant pour les applications relevant du domaine médicinal, du domaine agro-alimentaire, et du domaine des parfums et des cosmétiques.

Pour réaliser ce type d'extraction, on introduit généralement la substance contenant les constituants à extraire dans un extracteur et on la met en contact dans cet extracteur avec un fluide d'extraction porté à la température et la pression voulues. A la sortie de l'extracteur, le fluide d'extraction se trouve ainsi chargé de certains constituants et on récupère ces constituants par détente du fluide à la pression atmosphérique, ce qui permet de recueillir sous forme gazeuse le fluide d'extraction et de séparer sous forme liquide les constituants extraits. A la sortie de ce séparateur, la phase gazeuse est alors compressée pour être portée à la pression voulue puis refroidie à la température désirée et recyclée dans l'extracteur. Généralement le séparateur liquide-gaz est constitué par un cyclone et la phase gazeuse sortant de ce cyclone peut être éventuellement traitée sur différents pièges: charbon actif, résines absorbantes, etc . . . avant d'être recyclée dans l'extracteur. Un procédé de ce type est décrit par exemple dans le brevet US—A—4 201 660.

Ce mode de fonctionnement se révèle peu efficace lorsque les constituants à extraire sont très volatils car ceux-ci ne peuvent être recueillis facilement sous forme liquide lors de la détente du fluide d'extraction à la pression atmosphérique. En effet, lors de cette détente, la vitesse du fluide augmente très fortement et peut passer par exemple de 1 cm/s à 250 cm/s lorsqu'on passe d'une pression de 15 MPa à 0,1 MPa. Cette augmentation de vitesse entraîne la formation d'aérosols très fins qui ne peuvent être séparés dans le séparateur cyclone et sont de ce fait recyclés ou évacués avec les effluents gazeux. Pour éviter cet inconvénient, on a envisagé de réaliser la détente en deux temps. Tout d'abord détendre le fluide à une pression intermédiaire entre la pression atmosphérique et la pression utilisée dans l'extracteur, séparer les constituants liquides de la phase gazeuse détendue, puis détendre la phase gazeuse à la pression atmosphérique et séparer les constituants liquides de cette phase gazeuse dans un second séparateur constitué également par un cyclone. Ceci permet d'améliorer le résultat obtenu mais dans le cas de constituants très volatils les taux d'extraction ne sont pas suffisants.

La présente invention a précisément pour objet un procédé d'extraction de constituants par un fluide d'extraction constitué par un fluide supercritique ou un liquide sous pression, qui pallie l'inconvénient des procédés décrits ci-dessus.

Le procédé, selon l'invention, d'extraction d'au moins un constituant présent dans une substance au moyens d'un fluide d'extraction constitué par un fluide supercritique ou un liquide sous pression, consiste à mettre en contact dans un extracteur ladite substance avec ledit fluide à une température T et une pression suffisantes pour dissoudre le ou lesdits constituants dans ledit fluide, puis à séparer le ou lesdits

2

**EP 0 238 527 B1**

constituants extraits dans ledit fluide, et il se caractérisé en ce que le processus de séparation du ou desdits constituants extraits comprend:

— une première étape consistant à détendre le fluide sortant de l'extracteur à une pression $p_1$ inférieure à la pression p tout en le maintenant à la température voulue pour obtenir ledit fluide à l'état gazeux et une partie du ou desdits constituants extraits à l'état liquide, et à séparer dudit fluide à l'état gazeux le ou lesdits constituants à l'état liquide, et

— une deuxième étape consistant à liquéfier le fluide à l'état gazeux ainsi séparé, à rectifier le fluide ainsi liquéfié pour concentrer dans la phase liquide le ou les constituants extraits, et à traiter ladite phase liquide pour récupérer le ou lesdits constituants, en réalisant les opérations de liquéfaction et de rectification dans un séparateur-liquéfacteur de gaz en communication par sa partie supérieure avec une colonne verticale surmontée d'un condenseur de façon à laver la phase gazeuse évacuée par ladite colonne au moyen du fluide condensé.

En réalisant selon l'invention une concentration des constituants extraits dans une phase liquide, on évite les pertes de produits volatils qui se produisaient selon l'art antérieur au moment de la séparation liquide-gaz par entraînement de certains produits sous la forme d'aérosols dans le courant gazeux.

Par ailleurs, il est facile de récupérer ces constituants concentrés dans la phase liquide en soumettant celle-ci à une évaporation pour vaporiser le fluide qu'elle contient et récupérer ainsi uniquement les constituants à l'état liquide.

De préférence, on réalise l'opération de rectification de la phase liquéfiée en portant à une température légèrement supérieure la couche supérieure de la phase liquéfiée présente dans ledit séparateur-liquèfacteur.

En réalisant selon l'invention une première étape de séparation des constituants extraits, on améliore le rendement de la séparation en récupérant tout d'abord les constituants les moins volatils après détente à la pression $p_1$ et en récupérant ensuite après rectification les constituants les plus volatils qui se concentrent dans la phase liquide lors de l'opération de rectification. On peut réaliser l'opération de rectification à une pression $p_2$ inférieure à la pression $p_1$ utilisée pour la détente mais généralement on réalise la rectification à la même pression que celle utilisée pour la détente du fluide d'extraction.

Le procédé de l'invention peut aussi s'appliquer à des installations d'extraction fonctionnant en continu, c'est-à-dire à des installations dans lesquelles on fait circuler en continu le fluide dans l'extracteur, puis on récupère les constituants extraits dans le fluide et on recycle ensuite le fluide dans l'extracteur après l'avoir ramené dans les conditions de pression p et de température T d'extraction. Dans ce cas, le procédé peut comprendre:

— une première phase d'extraction et de séparation en continu du ou desdits constituants qui consiste à détendre le fluide sortant de l'extracteur à une pression $p_1$ inférieure à la pression p d'extraction tout en le maintenant à la température voulue pour obtenir ledit fluide à l'état gazeux et une partie du ou desdits constituants à l'état liquide, à séparer ledit fluide à l'état gazeux du ou desdits constituants à l'état liquide, et à recycler dans l'extracteur ledit fluide à l'état gazeux ainsi séparé après l'avoir amené dans les conditions de pression p et de température T d'extraction, et

— une deuxième phase finale dans laquelle on traite la totalité du fluide mis en circulation dans l'extracteur pour récupérer le ou les constituants qu'il contient. Cette deuxième phase consiste à soumettre la totalité du fluide mis en circulation dans l'extracteur au processus de séparation en deux étapes décrit précédemment, qui comprend une première étape consistant à détendre le fluide sortant de l'extracteur à une pression $p_1$ inférieure à la pression d'extraction tout en le maintenant à la température voulue pour obtenir ledit fluide à l'état gazeux et une partie du ou desdits constituants à l'état liquide, à séparer ledit fluide à l'état gazeux du ou desdits constituants à l'état liquide, et une deuxième étape consistant à liquéfier le fluide à l'état gazeux ainsi séparé, à rectifier le fluide ainsi liquéfié pour concentrer dans la phase liquide le ou les constituants extraits restants et à récupérer lesdits constituants dans ladite phase liquide.

Ceci permet d'extraire en continu les constituants les moins volatils qui se séparent facilement du fluide à l'état gazeux lors de la détente à la pression $p_1$, et de récupérer en fin d'opération les constituants plus volatils en les concentrant dans la phase liquide lors de l'opération de liquéfaction-rectification.

Dans le procédé de l'invention le fluide d'extraction est choisi en fonction des constituants à extraire et des conditions de température et de pression nécessaires pour obtenir la dissolution des constituants à extraire.

Comme on l'a vu précédemment, on peut utiliser comme fluide d'extraction un fluide supercritique ou un liquide sous pression. De préférence, on utilise un fluide supercritique, c'est-à-dire que l'on opère à une température T supérieure à la température critique et à une pression p supérieure à la pression critique.

A titre d'exemple, on peut utiliser comme fluide d'extraction, du gaz carbonique $CO_2$, de l'eau, du n-pentane, du chlorotrifluorométhane et de l'hexafluorure de soufre. Généralement, on utilise du gaz carbonique $CO_2$, car sa température et sa pression critiques ne sont pas trop élevées.

Dans le cas où l'on utilise du gaz carbonique comme fluide d'extraction, la pression $p_1$ se situe généralement dans la gamme de 3 à 6 MPa.

L'invention a également pour objet un dispositif d'extraction d'au moins l'un des constituants présents dans une substance au moyen d'un fluide d'extraction constitué par un fluide supercritique ou un liquide sous pression. Ce dispositif comprend un extracteur à l'intérieur duquel peut être disposée ladite substance, des moyens pour mettre en circulation dans ledit extracteur le fluide d'extraction dans des

3

conditions de pression p et de température T suffisantes pour dissoudre le ou les constituants de la substance dans ledit fluide et une conduite d'évacuation du fluide d'extraction sortant de l'extracteur munie d'une vanne de détente, et il se caractérisé en ce que ladite conduite est reliée à la partie inférieure d'un séparateur-liquéfacteur de gaz muni de moyens de refroidissement en communication par sa partie supérieure avec une colonne verticale surmontée d'un condenseur, ledit séparateur-liquéfacteur de gaz étant muni à sa partie inférieure de moyens pour soutirer une phase liquéfiée présente dans ledit séparateur-liquéfacteur et en ce qu'un séparateur gaz-liquide est interposé sur le circuit de gaz entre la vanne de détente et ledit séparateur-liquéfacteur de gaz.

De préférence, le condenseur situé à l'extrémité supérieure de la colonne est surmonté d'un échangeur de chaleur permettant de porter à une température supérieure le gaz sortant du condenseur.

Par ailleurs, les moyens de refroidissement dudit séparateur-liquéfacteur de gaz permettent de refroidir la partie inférieure dudit séparateur-liquéfacteur à une température plus faible que sa partie supérieure.

Généralement le séparateur gaz-liquide est un séparateur cyclone.

Le dispositif d'extraction de l'invention peut être conçu pour réaliser en continu l'extraction et la séparation des constituants d'une substance au moyen d'un fluide d'extraction traité à la sortie de l'extracteur pour en séparer une partie des constituants extraits et le recycler ensuite dans l'extracteur à la pression et à la température d'extraction désirées.

Selon un premier mode de réalisation d'un dispositif de ce type, celui-ci comprend:

— un circuit principal fermé comportant en série l'extracteur, ladite vanne de détente, un séparateur gaz-liquide et des moyens pour recycler le gaz sortant dudit séparateur dans ledit extracteur à la température T et la pression p d'extraction, et

— un séparateur-liquéfacteur de gaz en communication par sa partie supérieure avec une colonne verticale surmontée d'un condenseur, ledit séparateur-liquéfacteur de gaz étant monté en dérivation sur le circuit principal par l'intermédiaire d'une conduite munie d'une vanne débouchant dans ledit circuit principal entre ledit séparateur gaz-liquide et lesdits moyens de recyclage du gaz dans l'extracteur.

Avec un dispositif de ce type, les constituants les plus volatils qui restent en phase gazeuse lors de la séparation liquide-gaz sont recyclés avec le fluide dans l'extracteur et se concentrent de la sorte dans le circuit principal. En fin d'opération, on récupère ces constituants très volatils en traitant le fluide sortant de l'extracteur dans le liquéfacteur-séparateur de gaz lors de la vidange de l'installation. Ainsi, on peut récupérer en fin d'opération les constituants les plus volatils qui sont souvent des constituants essentiels pour les qualités organoleptiques d'un arôme ou d'un parfum. En effet, l'absence d'un constituant à des concentrations de quelques parties par million dénature souvent la qualité d'un arôme ou d'un parfum.

Selon un second mode de réalisation d'un dispositif d'extraction fonctionnant en continu, celui-ci comprend:

— un circuit principal fermé comportant en série l'extracteur, ladite vanne de détente, le séparateur gaz-liquide et des moyens de recyclage du gaz sortant dudit séparateur dans ledit extracteur à la température T et la pression p d'extraction,

— un séparateur-liquéfacteur de gaz en communication par sa partie supérieure avec une colonne verticale surmontée d'un condenseur,

— des moyens pour évacuer en continu dans un récipient la phase liquide séparée dans ledit séparateur gaz-liquide, et

— des moyens pour relier la partie supérieure du récipient au liquéfacteur-séparateur de gaz afin de traiter dans ledit liquéfacteur le gaz susceptible de passer du séparateur liquide-gaz dans le récipient.

Dans le cas de ce dispositif, on peut soutirer en continu les constituants extraits au niveau du séparateur liquide-gaz et le séparateur-liquéfacteur de gaz est monté en dérivation au niveau de ce séparateur liquide-gaz. Dans ce cas, on traite en permanence, une partie aliquote du gaz provenant de ce séparateur gaz-liquide afin de récupérer les constituants les plus volatils restant en phase gazeuse.

Selon un troisième mode de réalisation d'un dispositif de l'invention fonctionnant en continu, celui-ci comprend:

— un circuit principal fermé comportant en série l'extracteur, ladite vanne de détente, un séparateur gaz-liquide, un séparateur-liquéfacteur de gaz en communication par sa partie supérieure avec une colonne verticale surmontée d'un condenseur et des moyens pour recycler le gaz sortant dudit condenseur dans ledit extracteur à la température T et la pression p d'extraction,

— des moyens pour prélever en discontinu la phase liquide présente dans le séparateur-liquéfacteur de gaz,

— des moyens pour évaporer la phase liquide prélevée, et

— des moyens pour recycler le gaz séparé lors de l'évaporation de la phase liquide prélevé dans le circuit principal entre le condenseur et les moyens de recyclage du gaz dans l'extracteur.

Avec cet agencement, on peut traiter en continu le fluide sortant de l'extracteur pour séparer tout d'abord les constituants les moins volatils dans le séparateur liquide-gaz et récupérer ensuite les constituants les plus volatils dans le séparateur-liquéfacteur de gaz. Dans ce cas, pour maintenir à la valeur voulue la quantité de fluide circulant dans le circuit principal, il est nécessaire de traiter la phase liquide présente dans le liquéfacteur de gaz pour en séparer le fluide qu'elle contient et le recycler dans le circuit principal.

## EP 0 238 527 B1

D'autres caractéristiques et avantages de l'invention apparaîtront mieux à la lecture de la description qui suit, donnée bien entendu à titre illustratif et non limitatif, en référence au dessin annexé sur lequel:

— la figure 1 représente le diagramme d'état du gaz carbonique,

— la figure 2 représente schématiquement une installation d'extraction non conforme à l'invention,

— la figure 3 représente une installation d'extraction conformé à l'invention,

— la figure 4 illustre un premier mode de réalisation d'une installation d'extraction en continu conforme à l'invention,

— la figure 5 illustre un second mode de réalisation d'une installation d'extraction en continu conforme à l'invention, et

— la figure 6 illustre un troisième mode de réalisation d'une installation d'extraction en continu selon l'invention.

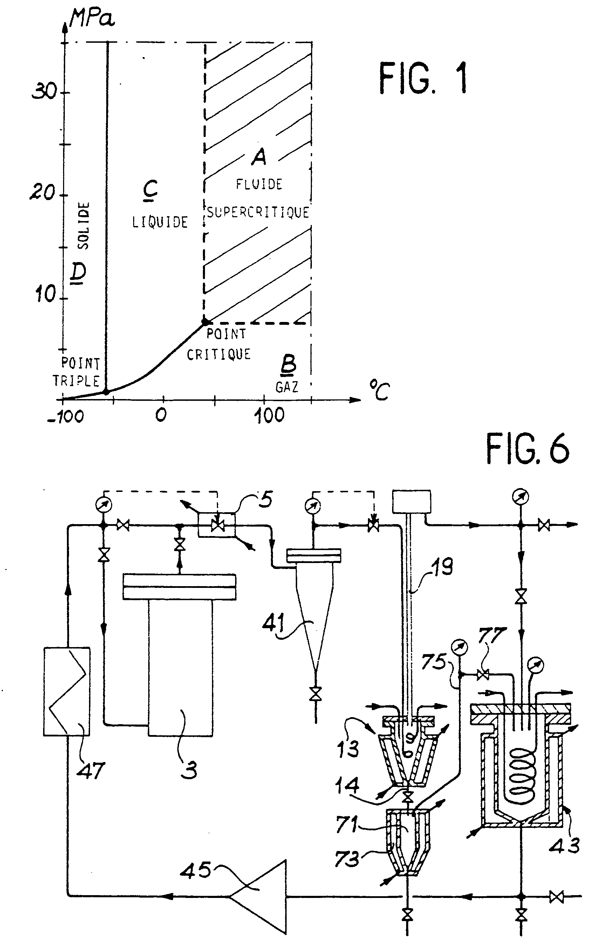

Sur la figure 1, qui représente le diagramme d'état pression (en MPa) — température (en °C) — du gaz carbonique $CO_2$, on voit que le point critique du $CO_2$ correspond à une température de 31°C et à une pression de 7,3 MPa. Aussi, le domaine d'existence du $CO_2$, à l'état de fluide supercritique correspond à la zone hachurée portant la référence A. En dehors de ce domaine, le $CO_2$ peut exister sous forme de gaz dans la zone référencée B, sous forme liquide dans la zone référencée C et sous forme solide dans la zone portant la référence D. Le domaine d'existence du $CO_2$ sous la forme de liquide sous pression correspond à la zone référencée C.

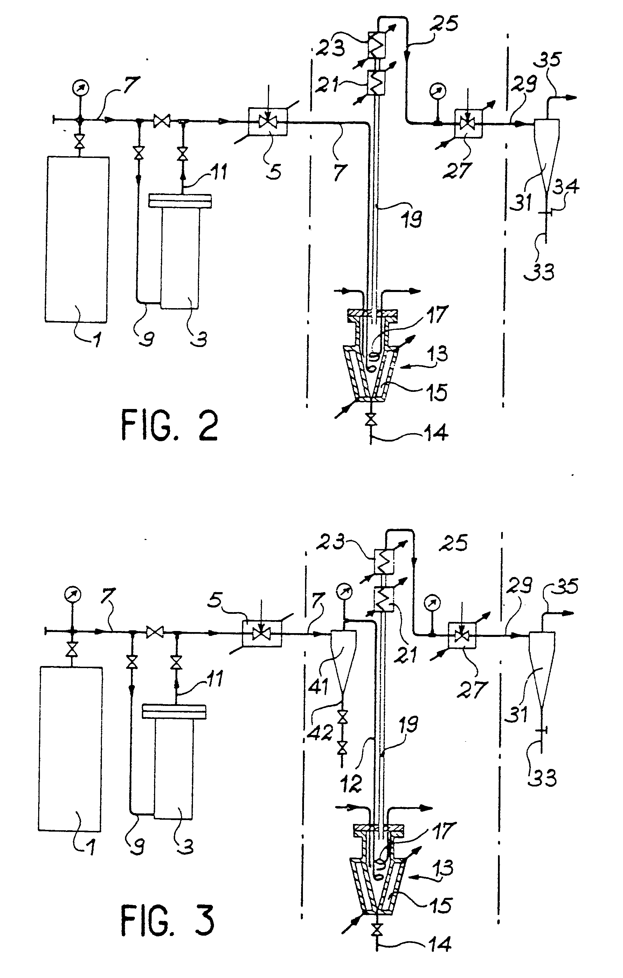

En se reportant maintenant à la figure 2, qui illustre à titre comparatif une installation d'extraction non conforme à l'invention, on voit que celle-ci comprend de façon classique, un générateur de fluide d'extraction 1, un extracteur 3 et une vanne de détente 5 munie d'un système de chauffage pour maintenir la température du fluide détendu à la valeur souhaitée. Un système de canalisations 7, 9 et 11 munies de vannes permet de mettre en circulation le fluide d'extraction dans l'extracteur ou de le diriger directement sur la vanne de détente 5. A la sortie de cette vanne de détente, le fluide détendu est introduit directement dans un séparateur-liquéfacteur de gaz 13 qui est muni à sa partie inférieure de moyens de refroidissement, constitués par une chemise 15 dans laquelle peut circuler un fluide de refroidissement. La partie supérieure du séparateur-liquéfacteur peut être refroidie à une température différente par circulation d'un fluide dans un serpentin 17. A sa partie supérieure, le séparateur-liquéfacteur est en communication avec une colonne verticale 19 surmontée d'un condenseur 21 et d'un échangeur de chaleur 23. Une conduite d'évacuation des gaz 25 relie la sortie gaz de l'échangeur de chaleur 23 à une vanne de détente 27 comportant également un système de chauffage pour maintenir la température du fluide détendu à la valeur voulue, et une conduite (29) relie la vanne de détente à un séparateur gaz-liquide 31 duquel on peut extraire la phase liquide par la conduite 33 munie d'une vanne 34 tandis que les effluents gazeux sont évacués par la conduite 35.

Dans une installation de ce type qui ne fonctionne pas selon le procédé de l'invention, on détend le fluide d'extraction sortant de l'extracteur 3 dans la vanne de détente 5 à une pression $p_1$ et une température $T_1$ correspondant à la zone B du diagramme de la figure 1 afin d'obtenir le fluide à l'état gazeux, ce qui conduit à faire passer une partie des constituants extraits à l'état liquide puisque leur solubilité dans le fluide décroît fortement lorsqu'on passe à l'état gazeux. Cette phase gazeuse est introduite dans le séparateur-liquéfacteur de gaz 13 qui est refroidi à une température suffisante pour que l'on obtienne la liquéfaction du gaz à la pression $p_1$ et que l'on passe de la zone B à la zone C du diagramme de la figure 1 tout en gardant la même pression. Dans ce liquéfacteur de gaz, il se produit ensuite une rectification de la phase liquéfiée, ce qui permet de concentrer les constituants extraits dans la phase liquide restant dans le séparateur liquéfacteur 13. En effet, le phase gazeuse en équilibre avec la phase liquide à la température et à la pression $p_1$ considérées peut être évacuée par la colonne verticale 19 et condensée en partie dans le condenseur 21, ce qui permet de laver la gaz par le fluide condensé et de concentrer les produits extraits dans la phase liquide. A la sortie du condenseur, le gaz est chauffé dans l'échangeur 23 pour éviter l'engorgement, puis évacué par la conduite 25, détendu à la pression voulue dans la vanne 27 puis dirigé vers le séparateur 31 dans lequel on peut recueillir les constituants résiduels qui sont passés à l'état liquide lors de la détente du gaz dans la vanne 27.

Pour favoriser l'opération de rectification de la phase liquéfiée dans le séparateur-liquéfacteur de gaz 13, on porte le serpentin 17 à une température supérieure à celle du fluide qui circule dans la chemise 15 afin de favoriser l'évaporation de la phase liquéfiée. Par ailleurs, la colonne 19 est de préférence à double enveloppe pour pouvoir être refroidie par circulation de fluide entre les deux enveloppes.

Dans ce mode de fontionnement, les constituants extraits par le fluide d'extraction sont concentrés dans la phase liquide qui reste dans le séparateur 13. En fin d'opération, on les sépare de la phase liquéfiée en vaporisant celle-ci, ce qui permet de récupérer les constituants à l'état liquide; on peut ensuite les soutirer par la conduite 14.

Sur la figure 3, on a représenté une installation conforme à l'invention. Sur cette figure, on a repris les mêmes références pour désigner les éléments de l'installation qui sont communs à cette installation et à celle représentée sur la figure 2. Ainsi, on voit que la seule différence entre les deux installations est l'introduction d'un séparateur gaz-liquide 41 du type cyclone disposé sur la conduite 7 entre la vanne de détente 5 et le séparateur-liquéfacteur de gaz 13, la sortie gaz du séparateur liquide-gaz étant raccordée au séparateur liquéfacteur 13 par la conduite 12 tandis que le liquide séparé peut être évacué par la conduite 42. Dans ce cas, après détente du fluide à la pression et à la température voulues dans la vanne 5, on sépare une partie des constituants extraits qui sont passés à l'état liquide lors de la détente, dans le séparateur 41, et l'on réalise les opérations de liquéfaction et de rectification sur le gaz sortant du séparateur 41. La suite des opérations est identique à celle que l'on a décrite à propos de la figure 2.

Les exemples suivants illustrent les résultats obtenus avec ces deux installations lors de l'extraction des différents constituants de la concrète de lavandin au moyen de $CO_2$ supercritique.

### Exemple Comparatif 1

Dans cet exemple, on utilise l'installation représentée sur la figure 2 et on introduit 293,5 g de concrète de lavandin sous forme de pâte sur les 6 plateaux en laiton de l'extracteur 3 qui a une capacité de 1 l. On met ensuite en circulation dans l'extracteur 3 à un débit d'environ 437 g/h du gaz carbonique supercritique à une température de 41 à 42°C, sous une pression d'environ 15 MPa. Le fluide sortant de l'extracteur est détendu dans la vanne 5 à une pression de 4,7 MPa tout en étant maintenu à une température de 40°C, puis liquéfié dans le séparateur-liquéfacteur 13 qui est refroidi par circulation de fluide réfrigérant à une température de 2 à 6°C dans la chemise 15 et une circulation d'eau à 19°C environ dans le serpentin 17.

Dans cette installation, on a utilisé une colonne 19 à double enveloppe de 4 mm de diamètre interne non garnie d'un hauteur de 1 m, refroidie par un fluide à une température de 0 à 4°C, et l'on refroidit également le condenseur 21 par un fluide à une température de 0 à 4°C. Le gaz sortant du condenseur 21 a été réchauffé dans l'échangeur 23 où circule un fluide à 60°C, puis détendu par la vanne 27 à la pression atmosphérique et évacué après passage dans le séparateur 31.

Dans ces conditions, après 7 h de fonctionnement, on a arrêté l'opération d'extraction et l'on a récupéré les constituants extraits dans le séparateur-liquéfacteur 13 par vaporisation du gaz carbonique. La quantité d'extrait recueilli a été de 109,48g, ce qui correspond à un rendement d'extraction de 37,3%.

On a déterminé par analyse chromatographique sur colonne capillaire les pourcentages relatifs des différents constituants présents dans la substance de départ et présents dans l'extrait liquide recueilli dans le séparateur-liquéfacteur 13. Les résultats sont donnés dans les tableaux 1 et 2 joints pour le benzène et les 13 principaux constituants classés par ordre croissant de volatilité.

Au vu de ces résultats, on constate que le rendement global net en constituants autres que le benzène est de 36,2%, et que le rendement de récupération en benzène qui est le constituant le plus volatil est de 48%.

### Exemple 2

Dans cet exemple, on utilise l'installation représentée sur la figure 3 avec un extracteur 3 de 0,61 et une colonne 19 de 2 m de haut garnie de billes et l'on dispose dans celui-ci 100 g de concrète de lavandin. On met en circulation dans l'extracteur 3 du $CO_2$ supercritique sous une pression de 9,2 à 10,6 MPa et une température de 40 à 48°C et l'on détend le fluide sortant de l'extracteur à une pression $p_1$ de 4 MPa en maintenant sa température à 40°C. Celui-ci passe dans le séparateur 41 où l'on recueille une partie des constituants liquides. Le gaz sortant du séparateur 41 est alors dirigé dans le liquéfacteur 13 où il est refroidi par une circulation de fluide réfrigérant ayant une température de 2 à 6°C dans la chemise 15 et revaporisé dans le serpentin 17 chauffé par de l'eau à 19°C. On fait également circuler dans le condenseur un fluide réfrigérant à une température de 0 à 4°C. Dans ces conditions, au bout de 5,55 heures, on recueille 64,72 g d'extrait liquide dans le séparateur 41 et 5,13 g d'extrait liquide dans le séparateur-liquéfacteur 13, ce qui fait une quantité totale de 69,85 g.

On analyse comme précédemment les pourcentages en poids de l'extrait liquide en chacun des constituants. Ces résultats sont donnés également dans les tableaux 1 et 2 joints où l'on a, de plus, indiqué les pourcentages en poids des constituants dans le produit de départ.

Par ailleurs, on détermine les rendements en constituants autres que le benzène correspondants aux extraits recueillis dans le séparateur 41 et dans le liquéfacteur 13. On trouve ainsi que le rendement est de 66,4% en constituants autres que le benzène dans le séparateur cyclone 51 et qu'il est de 4,4% en produits autres que le benzène dans le liquéfacteur 13. Le rendement total d'extraction pour les constituants autres que le benzène est donc de 70,8%, ce qui représente une amélioration très nette par rapport aux résultats obtenus avec l'installation de la figure 2 où il était de 36,2%.

Le rendement de récupération du benzène est de 40%, soit sensiblement identique à celui que l'on obtient dans l'installation de la figure 2.

La teneur en benzène de l'extrait liquide recueilli dans le séparateur 41 est de 0,78% et celle de l'extrait recueilli dans le liquéfacteur 13 est de 16,36%. Ainsi, on viot que le séparateur-liquéfacteur 13 permet de récupérer les constituants les plus volatils tels que le benzène, qui sont difficiles à recueillir dans le séparateur 41.

### Exemple Comparatif 3

A titre de comparaison, on a réalisé l'extraction des constituants du concrète de Lavandin dans une installation selon l'art antérieur, c'est-à-dire dans une installation telle que celle de la figure 3 comportant uniquement le générateur de fluide supercritique 1, l'extracteur 3, la vanne de détente 5 et un séparateur cyclone 41, en réalisant la détente dans la vanne 5 à la pression atmosphérique et à la température ambiante.

Dans ce cas, on a disposé dans l'extracteur 3, 87 g de pâte de concrète de Lavandin et on l'a soumise à l'extraction par du $CO_2$ supercritique sous une pression de 8 à 10 MPa et à une température de 40 à 47°C. Au bout de 30 heures de fonctionnement, on a recueilli dans le séparateur 41, 28,14 g d'extrait liquide, ce qui

EP 0 238 527 B1

correspond à un rendement hors benzène de 35,7%. Une analyse des constituants liquides recueillis dans le séparateur 41 et une analyse du produit de départ effectuées par chromatographie sur colonne capillaire ont permis de déterminer les pourcentages des différents constituants dans le produit de départ et dans l'extrait liquide. Ces résultats sont donnés dans les tableaux 1 et 2.

Au vu de ces résultats, on constate que le rendement global net pour les constituants autres que le benzène est de 35,7% et que le rendement de récupération en benzène est très faible, puisqu'il est inférieur à 0,3%, ainsi que les rendements de récupération de l'α-pinène, du camphène et du β-pinène voisins de zéro, puisque ces composés sont absents de l'analyse chromatographique de l'extrait liquide. Ainsi, on voit que le fait de réaliser, selon l'invention, la détente du fluide à une pression intermédiaire entre la pression critique et la pression atmosphérique et de liquéfier ensuite la phase gazeuse permet d'améliorer le rendement de récupération des produits très volatils.

Exemple Comparatif 4

Dans cet exemple on utilise une installation comportant un générateur de fluide supercritique 1, un extracteur 3, une première vanne de détente 5, un séparateur 41, une deuxième vanne de détente 27 et un séparateur 31, soit l'installation représentée sur la figure 3, en supprimant le séparateur-liquéfacteur 13. Dans ce cas, on réalise l'extraction avec du $CO_2$ supercritique sous une pression du 11,5 à 11,7 MPa et une température de 43 à 44°C, et on détend le fluide supercritique dans la vanne 5 à une pression de 3 à 4 MPa à une température de 25°C. On introduit dans l'extracteur 3, 27,66 g de substance sous la forme d'une pâte et l'on recueille à la sortie du séparateur 41 au bout de 22 heures d'opération, 13,32 g de constituant.

L'analyse par chromatographie capillaire des constituants du produit de départ et des constituants de l'extrait liquide recueilli a donné les résultats qui figurent dans les tableaux 1 et 2. Au vu de ces résultats, on constate que le taux de récupération en constituants autres que le benzène est de 52,2% mais que le rendement de récupération en benzène n'est que de 6%. Les quantités d'α-pinène, de camphène et de β-pinène sont également faibles.

Ainsi, on constate que, lorsqu'on n'utilise pas de séparateur-liquéfacteur 13, le pourcentage de constituants très volatils extraits et récupérés diminue fortement. Dans le tableau 2 joint, on a regroupé les résultats et les conditions opératoires des exemples 1 à 4.

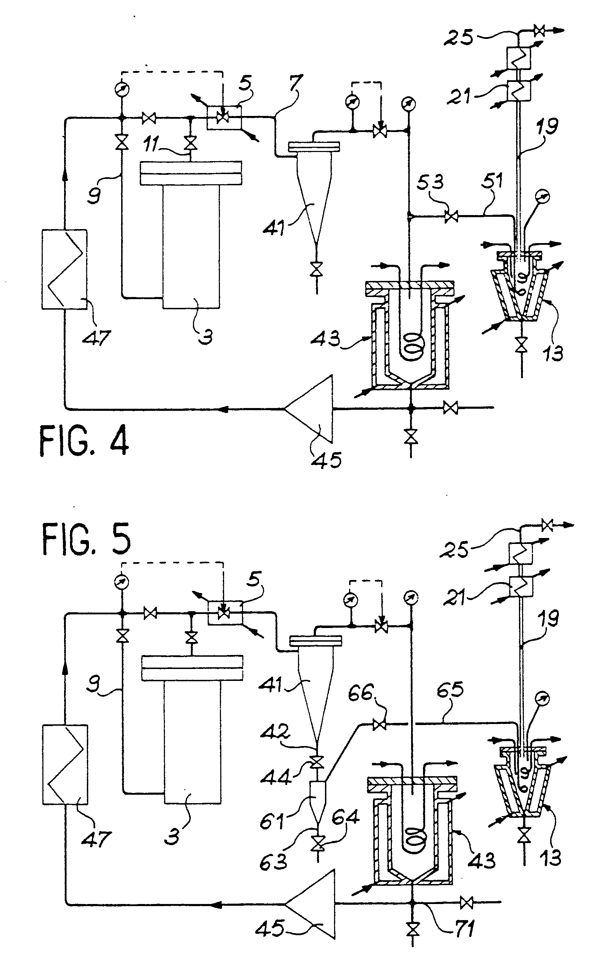

Sur les figures 4 à 6, on a représenté trois modes de réalisation d'installation d'extraction par fluide supercritique ou liquide sous pression fonctionnant en continu, et mettant en oeuvre le processus de séparation des constituants extraits conforme a l'invention. Sur ces figures, on a utilisé les mêmes références pour désigner les éléments déjà représentés sur les figures 2 et 3.

Sur la figure 4 qui illustre un premier mode de réalisation d'une installation fonctionnant en continu, on voit que celle-ci comprend l'extracteur 3, la vanne de détente 5 et le séparateur 41. Elle est complétée par un liquéfacteur 43, une pompe 45 et un échangeur 47 qui permettent de recycler dans l'extracteur 3 le gaz sortant de séparateur 41 après l'avoir porté à la pression p et à la température T d'extraction utilisées cans l'extracteur 3. Cette installation comprend également selon l'invention un séparateur-liquéfacteur 13 quii est monté en dérivation sur le circuit principal de recyclage du fluide dans l'extracteur 3, par une conduite 51 munie d'une vanne 53, la conduite 51 débouchant dans le circuit principal entre le séparateur 41 et le liquéfacteur 43.

Dans cette installation, on réalise l'extraction de la façon suivante. Dans une première phase, on fait circuler en continu le fluide d'extraction dans l'extracteur 3, puis après avoir détendu le fluide à la pression $p_1$, on sépare de celui-ci les constituants extraits qui sont passés à l'état liquide dans le séparateur cyclone 41. Les constituants extraits non séparés dans le séparateur 41 se concentrent dans le gaz qui est recyclé dans l'extracteur 3 par l'intermédiaire du liquéfacteur 43, de la lompe 45 et de l'échangeur 47. Aussi, en fin d'opération, on récupère dans une deuxième phase opératoire, les constituants extraits qui n'ont pu être séparés dans le séparateur 41 en utilisant le procédé de l'invention. Dans ce but, on fait passer la totalité du fluide du circuit principal dans ce liquéfacteur 13. Ainsi, on concentre dans la phase liquide présente dans le séparateur-liquéfacteur 13 les constituants restants qui sont ensuite séparés du gaz liquéfié par vaporisation de celui-ci.

Sur la figure 5, on a représenté un autre mode de réalisation d'une installation fonctionnant en continu selon l'invention. Sur cette figure, on retrouve l'extracteur 3, la vanne de détente 5, le séparateur cyclone 41, le liquéfacteur de gaz 43, la pompe 45 et l'échangeur 47. Dans le cas de cette installation, la conduite 42 d'évacuation de l'extrait liquide du séparateur 41 qui est munie d'une vanne 44, débouche dans un récipient 61 de récupération de l'extrait qui est muni à sa partie inférieure d'une conduite d'évacuation 63 équipée d'une vanne 64. Ce récipient 61 est relié à sa partie supérieure par une conduite 65 munie d'une vanne 66 à un séparateur-liquéfacteur de gaz 13 qui est maintenu à une pression légèrement inférieure à la pression $p_1$ du séparateur-cyclone 41. Dans ce cas, la vanne 44 étant ouverte, l'extrait liquide descend dans le récipient 61 et le gaz qui passe également dans ce récipient est dirigé dans le liquéfacteur 13 où l'on sépare, comme précédemment, les autres constituants extraits. Le gaz qui sort par la conduite 25 peut éventuellement être traité puis recyclé dans le circuit principal de l'installation. De toutes façons, dans cette installation, il est nécessaire d'ajouter un appoint de fluide dans le circuit principal, par exemple par la conduite 71 pour combler les pertes en gaz par la conduite 25 du liquéfacteur 13.

Sur la figure 6, on a représenté un troisième mode de réalisation d'une installation d'extraction en continu selon l'invention. Dans ce cas, l'installation comprend également un circuit principal fermé dans

7

lequel sont montés en série l'extracteur 3, la vanne de détente 5, le séparateur-cyclone 41, le liquéfacteur de gaz 43, la pompe de recyclage 45 et l'échangeur 47, et le séparateur-liquéfacteur de gaz 13 est interposé sur le circuit de gaz entre le séparateur cyclone 41 et le liquéfacteur de gaz 43.

Dans ce cas, la conduite 14 d'évacuation du séparateur-liquéfacteur de gaz 13 débouche dans un évaporateur 71 qui peut être chauffé par circulation d'un fluide tel que de l'eau dans la chemise 73. A sa partie supérieure, l'évaporateur 71 est raccordé par l'intermédiaire d'un conduite 75 munie d'une vanne 77 au liquéfacteur de gaz 43.

Dans cette installation on soumet successivement le fluide détendu sortant de l'extracteur 3 à une séparation liquide-gaz dans le séparateur 41, puis à une séparation par liquéfaction et rectification dans le séparateur-liquéfacteur 13. Le gaz qui sort de la colonne 19 est ensuite recyclé par l'intermédiaire du liquéfacteur 43 de la pompe de recyclage 45 et de l'échangeur 47 dans l'extracteur 3. Pour maintenir à la même valeur la quantité de gaz qui circule dans le circuit principal on traite la phase liquide présente dans le séparateur-liquéfacteur 13 pour évaporer le gaz qu'elle contient et le recycler dans le circuit principal. Dans ce but, on soutire de façon discontinue la phase liquide du liquéfacteur 13 par la conduite 14 et on évapore le gaz dans l'évaporateur 71 afin de recycler celui-ci par la conduite 75 dans le liquéfacteur 43.

TABLEAU 1

| Constituants | | Exemple 1 | | Exemple 2 | | Exemple 3 | | Exemple 4 | |
|---|---|---|---|---|---|---|---|---|---|
| | | Produit de départ | Extrait liquide | Produit de départ | Extrait liquide | Produit de départ | Extrait liquide | Produit de départ | Extrait liquide |
| —% de benzène dans le produit de départ et dans l'extrait liquide — | | | | | | | | | |
| Benzène | | 9,54 | 12,28 | 3,34 | 17,14 | 9,38 | 0,09 | 9,54 | 1,51 |

— évolution du profil chromatographique des 13 principaux constituants

| Constituants | | Exemple 1 | | Exemple 2 | | Exemple 3 | | Exemple 4 | |
|---|---|---|---|---|---|---|---|---|---|
| | | Produit de départ | Extrait liquide | Produit de départ | Extrait liquide | Produit de départ | Extrait liquide | Produit de départ | Extrait liquide |
| alpha Pinène | pic n° 1 | 0,21 | 0,24 | 0,35 | 0,39 | 0,21 | 0 | 0,21 | 0,10 |
| Camphène | pic n° 2 | 0,25 | 0,28 | 0,18 | 0,19 | 0,24 | 0 | 0,25 | 0,14 |
| β Pinène + Sabinène | pic n° 3 | 0,23 | 0,28 | 0,24 | 0,19 | 0,04 | 0 | 0,23 | 0,14 |
| Octanone 3 | pic n° 4 | 0,60 | 0,76 | 0,59 | 0,56 | 0,63 | 0,20 | 0,60 | 0,48 |
| Cinéole 1—8 | pic n° 5 | 3,75 | 4,25 | 3,53 | 3,62 | 3,87 | 1,23 | 3,75 | 3,03 |
| Limonène | pic n° 6 | 1,12 | 0,83 | 0,89 | 0,85 | 1,57 | 0,26 | 1,12 | 0,68 |
| cis β Ocimène | pic n° 7 | 1,73 | 1,95 | 1,12 | 1,22 | 1,67 | 0,59 | 1,73 | 1,27 |
| trans β Ocimène | pic n° 8 | 1,80 | 2,07 | 1,14 | 1,32 | 1,87 | 0,65 | 1,80 | 1,32 |
| Acétate d'Hexyle | pic n° 9 | 0,42 | 0,21 | 0,34 | 0,36 | 0,31 | 0,27 | 0,42 | 0,33 |
| Linalol | pic n° 10 | 32,54 | 30,48 | 36,00 | 36,53 | 32,35 | 31,46 | 32,54 | 31,67 |
| Camphre | pic n° 11 | 6,33 | 6,15 | 6,36 | 6,76 | 6.19 | 5.26 | 6,33 | 6,10 |
| Bornéol | pic n° 12 | 3,62 | 2,36 | 2,95 | 3,86 | 3,52 | 3,37 | 3,62 | 3,13 |
| Acétate de Linalyle | pic n° 13 | 47,41 | 50,15 | 47,33 | 44,16 | 47,54 | 56,69 | 47,41 | 51,64 |

TABLEAU 2

| | | Ex. 1 | Ex. 2 | Ex. 3 | Ex. 4 |
|---|---|---|---|---|---|
| Conditions supercritiques | Pression (MPa) | 15,5—14,5 | 9,2—10,6 | 0,8—10 | 11,5—11,7 |
| | Température (°C) | 41—42 | 48—40 | 40—47 | 44—43 |
| Conditions de séparation | Pression (MPa) | $P_1 = p_2 = 4,7$ | $p_1 = 4$ MPa | $p_1 = 0,1$ MPa | $p_1 = 3$ à 4 |
| | Température (°C) | 0 à 4°C dans (13) | 1 à 5°C dans (13) | 25°C | 25°C |
| Durée en heures | | 7,08 | 2 + 3,55 | 29,9 | 22 |
| % en poids des constituants récupérés autres que le benzène | | 36,2 | 66,4 en (41) + 4,4 en (13) | 35,7 | 52,2 |
| % benzène | dans produit de départ | 9,54 | 3,34 | 9,38 | 9,54 |
| | dans extrait liquide | 12,28 | 0,70 en (41) 16,36 en (13) | 0,088 | 1,51 |
| Rendement de récupération du benzène (% en poids) | | 48 | 40 | ≤ 0,3 | 6 |

EP 0 238 527 B1

**Revendications**

1. Procédé d'extraction d'au moins un constituant présent dans une substance au moyen d'un fluide d'extraction constitué par un fluide supercritique ou un liquide sous pression, selon lequel on met en contact dans un extracteur ladite substance avec ledit fluide à une température T et une pression p suffisantes pour dissoudre le ou lesdits constituants dans ledit fluide, puis on sépare le ou lesdits constituants extraits dans ledit fluide, caractérisé en ce que le processus de séparation du ou desdits constituants extraits comprend:

— une première étape consistant à détendre le fluide sortant de l'extracteur à une pression $p_1$ inférieure à la pression p tout en le maintenant à la température voulue pour obtenir ledit fluide à l'état gazeux et une partie du ou desdits constituants extraits à l'état liquide, et à séparer dudit fluide à l'état gazeux le ou lesdits constituants à l'état liquide, et

— une deuxième étape consistant à liquéfier le fluide à l'état gazeux ainsi séparé, à rectifier le fluide ainsi liquéfié pour concentrer dans la phase liquide le ou les constituants extraits, et à traiter ladite phase liquide pour récupérer le ou lesdits constituants, en réalisant les opérations de liquéfaction et de rectification dans un séparateur-liquéfacteur de gaz (13) en communication par sa partie supérieure avec une colonne verticale (19) surmontée d'un condenseur (21) de façon à laver la phase gazeuse évacuée par ladite colonne au moyen du fluide condensé.

2. Procédé selon la revendication 1, caractérisé en ce que l'on réalise l'opération de rectification de la phase liquéfiée en portant à une température légèrement supérieure, la couche supérieure de la phase liquéfiée présente dans ledit séparateur-liquéfacteur.

3. Procédé selon l'une quelconque des revendications 1 et 2, caractérisé en ce qu'il comprend:

— une première phase d'extraction et de séparation en continu du ou desdits constituants, qui consiste à détendre le fluide sortant de l'extracteur à une pression $p_1$, inférieure à la pression p d'extraction tout en le maintenant à la température voulue pour obtenir ledit fluide à l'état gazeux et une partie du ou desdits constituants à l'état liquide, à séparer ledit fluide à l'état gazeux du ou desdits constituants à l'état liquide, et à recycler dans l'extracteur ledit fluide à l'état gazeux ainsi séparé après l'avoir amené à la pression p et à la température T d'extraction, et

— une deuxième phase finale qui consiste à soumettre la totalité du fluide mis en circulation dans l'extracteur au processus de séparation en deux étapes selon l'une quelconque des revendications 1 et 2.

4. Procédé selon l'une quelconque des revendications 1 à 3, caractérisé en ce que l'on récupère lesdits constituants dans la phase liquéfiée en soumettant celle-ci à une évaporation.

5. Procédé selon l'une quelconque des revendications 1 à 4, caractérisé en ce que ledit fluide est du gaz carbonique et en ce que la pression $p_1$ est de 3 à 6 MPa (30 à 60 bars).

6. Procédé selon l'une quelconque des revendications 1 à 5, caractérisé en ce que la température T est supérieure à la température critique et la pression p est supérieure à la pression critique.

7. Procédé selon l'une quelconque des revendications 1 à 6, caractérisé en ce que ledit matériau est de la concrète de lavandin.

8. Dispositif d'extraction d'au moins l'un des constituants présents dans une substance au moyen d'un fluide d'extraction constitué par un fluide supercritique ou un liquide sous pression, comprenant un extracteur (3) à l'intérieur duquel peut être disposée ladite substance, des moyens (9) pour mettre en circulation dans ledit extracteur le fluide d'extraction dans des conditions de pression p et de température T suffisantes pour dissoudre le ou les constituants de la substance dans ledit fluide, et une conduite d'évacuation (7) du fluide d'extraction sortant de l'extracteur muni d'une vanne de détente (5), caractérisé en ce que ladite conduite (7) est reliée à la partie inférieure d'un séparateur-liquéfacteur de gaz (13) muni de moyens de refroidissement (15, 17) en communication par sa partie supérieure avec une colonne verticale (19) surmontée d'un condenseur (21), ledit séparateur-liquéfacteur de gaz (13) étant muni à sa partie inférieure de moyens (14) pour soutirer une phase liquéfiée présente dans ledit séparateur-liquéfacteur et en ce qu'un séparateur gaz-liquide (41) est interposé sur le circuit de gaz entre la vanne de détente (5) et ledit séparateur-liquéfacteur de gaz (13).

9. Dispositif selon la revendication 8, caractérisé en ce que les moyens de refroidissement (15, 17) dudit séparateur-liquéfacteur de gaz permettent de refroidir la partie inférieure dudit séparateur-liquéfacteur à une température plus faible que sa partie supérieure.

10. Dispositif selon l'une quelconque des revendications 8 et 9, caractérisé en ce que le condenseur (21) situé à l'extrémité supérieure de la colonne (19) est surmonté d'un échangeur de chaleur (23) pour porter à une température supérieure le gaz sortant du condenseur.

11. Dispositif selon l'une quelconque des revendications 8 à 10, caractérisé en ce que le séparateur gaz-liquide (41) est un séparateur cyclone.

12. Dispositif selon l'une quelconque des revendications 8 à 11, caractérisé en ce qu'il comprend:

— un circuit principal fermé comportant en série l'extracteur (3), ladite vanne de détente (5), un séparateur gaz-liquide (41) et des moyens (43, 45, 47) pour recycler le gaz sortant dudit séparateur (41) dans ledit extracteur (3) à la température T et à la pression p d'extraction, et

— un séparateur-liquéfacteur de gaz (13) en communication par sa partie supérieure avec une colonne verticale (19) surmontée d'un condenseur (21), ledit séparateur-liquéfacteur de gaz (13) étant monté en dérivation sur le circuit principal par l'intermédiaire d'une conduite (51) munie d'une vanne (53)

débouchant dans ledit circuit principal entre ledit séparateur gaz-liquide (41) et lesdits moyens (43, 45, 47) de recyclage de gaz dans l'extracteur (3).

13. Dispositif selon l'une quelconque des revendications 8 à 11, caractérisé en ce qu'il comprend:

— un circuit principal fermé comportant en série l'extracteur (3), ladite vanne de détente (5), le séparateur gaz-liquide (41) et des moyens (43, 45, 47) de recyclage du gaz sortant dudit séparateur (41) dans ledit extracteur (3) à la température T et la pression p d'extraction.

— un séparateur-liquéfacteur de gaz (13) en communication par sa partie supérieure avec une colonne verticale (19) surmontée d'un condenseur (21),

— des moyens pour évacuer en continu dans un récipient (61) la phase liquide séparée dans ledit séparateur gaz-liquide (41), et

— des moyens pour relier la partie supérieure du récipient (61) au séparateur-liquéfacteur de gaz (13) afin de traiter dans ledit liquéfacteur le gaz susceptible de passer du séparateur liquide-gaz (41) dans le récipient (61).

14. Dispositif selon l'une quelconque des revendications 8 à 11, caractérisé en ce qu'il comprend:

— un circuit principal fermé comportant en série l'extracteur (3), ladite vanne de détente (5), un séparateur gaz-liquide (41), un séparateur-liquéfacteur de gaz (13) en communication par sa partie supérieure avec une colonne verticale (19) surmontée d'un condenseur (21) et des moyens (43, 45, 47) pour recycler le gaz sortant dudit condenseur (21) dans ledit extracteur (3) à la température T et la pression p d'extraction,

— des moyens (14) pour prélever en discontinu la phase liquide présente dans le séparateur-liquéfacteur de gaz (13),

— des moyens (71) pour évaporer la phase liquide prélevée, et

— des moyens (75, 77) pour recycler le gaz séparé lors de l'évaporation de la phase liquide prélevée dans le circuit principal entre le condenseur (21) et les moyens (43, 45, 47) de recyclage du gaz dans l'extracteur (3).

## Patentansprüche

1. Verfahren zur Extraktion wenigstens eines Bestandteils in einer Substanz mittels einer Extraktionsflüssigkeit, die aus einem superkritischen Fluid oder einer unter Druck stehenden Flüssigkeit besteht, entsprechend welchem man in einem Extraktor die Substanz mit dem Fluid bei einer Temperatur T und einem Druck p, die genügen, um den oder die Bestandteile in dem Fluid aufzulösen, in Kontakt bringt und man dann den oder die extrahierten Bestandteile in dem Fluid trennt, dadurch gekennzeichnet, daß der Trennvorgang des oder der extrahierten Bestandteile aufweist:

— einen ersten Schritt, der darin besteht, das Fluid, das aus dem Extraktor kommt, auf einen Druck $p_1$ zu entspannen, der niedriger als der Druck p ist, während man das Fluid bei der gewünschten Temperatur hält, um das Fluid im gasförmigen Zustand und einen Teil des oder der extrahierten Bestandteile im flüssigen Zustand zu erhalten, und den oder die Bestandteile im flüssigen Zustand von dem Fluid im gasförmigen Zustand zu trennen, und

— einen Zweiten Schritt, der darin besteht, das so getrennte, gasförmige Fluid zu verflüssigen, das so verflüssigte Fluid zu rektifizieren, um in der flüssigen Phase den oder die extrahierten Bestandteile zu konzentrieren, und die flüssigen Phase zu behandeln, um den oder die Bestandteile zu gewinnen, wobei der Vorgang der Verflüssigung und der Rektifizierung in einem Gastrenner-Verflüssiger (13) durchgeführt wird, der mit seinem oberen Teil mit einer vertikalen Kolonne (19) in Verbindung steht, die von einem Kondensator (21) überragt wird, um die durch die Kolonne evakulerte gasförmigen Phase mit Hilfe des kondensierten Fluids zu reinigen.

2. Verfahren nach Anspruch 1, dadurch gekennzeichnet, daß man den Vorgang der Rektifizierung der verflüssigten Phase durchführt, indem man die obere Schicht der in dem Trenner-Verflüssiger vorhandenen, verflüssigten Phase auf eine etwas höhere Temperatur bringt.

3. Verfahren nach einem der Ansprüche 1 und 2, dadurch gekennzeichnet, daß es aufweist:

— eine erste Phase der Extraktion und der darauffolgenden Trennung des oder der Bestandteile, die darin besteht, daß man das Fluid, das aus dem Extraktor mit einem Druck $p_1$, der niedriger ist als der Extraktionsdruck p, kommt entspannt, wobei man es bei der gewünschten Temperatur hält, um das Fluid im gasförmigen und einen Teil des oder der Bestandteile im flüssigen Zustand zu erhalten, daß man das Fluid im gasförmigen Zustand von dem oder den Bestandtellen im flüssigen Zustand trennt und daß man das gasförmige, derart getrennte Fluid in den Extraktor zurückführt, nachdem man es auf den Druck p und die Temperatur T der Extraktion gebracht hat, und

— eine zweite, abschließende Phase, die darin besteht, die Gesamtheit des Fluids, das im Extraktor im Umlauf ist, dem Trennvorgang in zwei Etappen nach einem der Ansprüche 1 und 2 zu unterwerfen.

4. Verfahren nach einem der Ansprüche 1 bis 3, dadurch gekennzeichnet, daß man die Bestandteile in der flüssigen Phase gewinnt, indem diese einer Verdampfung unterworfen wird.

5. Verfahren nach einem der Ansprüche 1 bis 4, dadurch gekennzeichnet, daß das Fluid Kohlendioxid ist und daß der Druck p 3 bis 6 MPa (30 bis 60 bar) beträgt.

6. Verfahren nach einem der Ansprüche 1 bis 5, dadurch gekennzeichnet, daß die Temperatur T höher als die kritische Temperatur und der Druck p höher als der kritische Druck ist.

EP 0 238 527 B1

7. Verfahren nach einem der Ansprüche 1 bis 6, dadurch gekennzeichnet, daß das Material das Konzentrat des Lavandin ist.

8. Anlage zur Extraktion wenigstens einer der in einer Substanz vorhandenen Bestandteile mit Hilfe eines Extraktionsfluids, das aus einem superkritischen Fluid oder einer unter Druck stehenden Flüssigkeit besteht, die aufweist:

einen Extraktor (3), in dessen Inneren die Substanz angeordnet werden kann; eine Vorrichtung (9), um in dem Extraktor das Extraktionsfluid unter den Bedingungen eines Druckes p und einer Temperatur T, die genügen, den oder die Bestandteile der Substanz in dem Fluid aufzulösen, zirkulieren zu lassen; und eine Schwemmleitung (7) für das Extraktionsflüid, die aus dem Extraktor führt und mit einem Entspannungsventil ausgestattet ist, dadurch gekennzeichnet, daß die Leitung (7) mit dem unteren Teil eines Gastrenners-Verflüssigers (13) verbunden ist, der mit einer Abkühlvorrichtung (15, 17) ausgestattet ist, die über seinen oberen Teil, mit einer von einem Kondensator (21) überragten, vertikalen Kolonne (19) in Verbindung steht, wobei der Gastrenner-Verflüssiger (13) in seinem unteren Teil mit einer Vorrichtung (14) zum Entnehmen einer in dem Trenner-Verflüssiger vorhanden, flüssigen Phase ausgestattet ist, und daß ein Gas-Flüssigkeitstrenner (41) in den Gaskreislauf zwischen dem Entspannungsventil (5) und dem Gastrenner-Verflüssiger (13) eingefügt ist.

9. Anlage nach Anspruch 8, dadurch gekennzeichnet, daß die Kühlvorrichtung (15, 17) des Gastrenners-Verflüssigers das Abkühlen des unteren Teils des Trenners-Verflüssigers auf eine niedrigere Temperatur als in selnem oberen Teil ermöglicht.

10. Anlage nach einem der Ansprüche 8 und 9, dadurch gekennzeichnet, daß der am oberen Ende der Kolonne (19) befindliche Kondensator (21) von einem Wärmetauscher überragt wird, um das den Kondensator velassende Gas auf eine höhere Temperatur zu bringen.

11. Anlage nach einem der Ansprüche 8 bis 10, dadurch gekennzeichnet, daß der Gas-Flüssigkeitstrenner (41) ein Wirbeitrenner ist.

12. Anlage nach einem der Ansprüche 8 bis 11, dadurch gekennzeichnet, daß sie aufweist:
— einen geschlossenen Hauptkreislauf, der der Reihe nach den Extraktor (3), das Entspannungsventil (5), einen Gas-Flüssigkeitstrenner (41) und eine Vorrichtung (43, 45, 47) zum Zurückführen des den Trenner (41) verlassenden Gases in den Extraktor (3) bei der Temperatur T und dem Druck p der Extraktion beinhaltet, und
— einen Gastrenner-Verflüssiger (13), der mit seinem oberen Teil mit einer vertikalen, von einem Kondensator (21) überragten Kolonne (19) in Verbindung steht, wobei der Gastrenner-Verflüssiger (13) neben den Hauptkreislauf mit einer verbindenden Röhre (51) montiert ist, die mit einem Ventil (53) ausgerüstet ist, das in den Hauptkreislauf zwischen dem Gas-Flüssigkeitstrenner (41) und der Rückführvorrichtung (43, 45, 47) des Gases in den Extraktor (3) mündet.

13. Anlage nach einem der Ansprüche 8 bis 11, dadurch gekennzeichnet, daß sie aufweist:
— einen geschlossenen Hauptkreislauf, der der Reihe nach den Extraktor (3), das Entspannungsventil (5), einen Gas-Flüssigkeitstrenner (41) und eine Vorrichtung (43, 45, 47) zum Zurückführen des den Trenner (41) verlassenden Gases in den Extraktor (3) bei der Temperatur T und dem Druck p der Extraktion beinhaltet, und
— einem Gastrenner-Verflüssiger (31), der mit seinem oberen Teil mit einer vertikalen, von einem Kondensator (21) überragten Kolonne (19) in Verbindung steht,
— einer Vorrichtung zum kontinuierlichen Evakuieren der in dem Gas-Flüssigkeitstrenner (41) getrennten flüssigen Phase in einen Rezipienten (61), und
— eine Vorrichtung zum Verbinden des oberen Teils des Rezipienten (61) mit dem Gasverflüssiger-Trenner (13), um in dem Verflüssiger das Gas zu behandeln, das fähig ist von Gas-Flüssigkeitstrenner (41) in den Rezipienten (61) zu kommen.

14. Anlage nach einem der Ansprüche 8 bis 11, dadurch gekennzeichnet, daß sie aufweist:
— einen geschlossenen Hauptkreislauf, der der Reihe nach den Extraktor (3), das Entspannungsventil (5), einen Gas-Flüssigkeitstrenner (41), einen Gastrenner-Verflüssiger (13), der mit seinem oberen Teil mit einer vertikalen, von einem Kondensator (21) überragten Kolonne (19) in Verbindung steht, und eine Vorrichtung (43, 45, 47) zum Zurückführen des den Kondensator (21) verlassenden Gases in den Extraktor (3) bei der Temperatur T und dem Druck p per Extraktion beinhaltet,
— eine Vorrichtung (14), um die in dem Gastrenner-Verflüssiger vorhandene flüssige Phase diskontinuierlich abzuscheiden,
— eine Vorrichtung (71), um die abgeschiedene, flüssige Phase zu verdampfen, und
— eine Vorrichtung (75, 77), um das bei der Verdampfung der abgeschiedenen flüssigen Phase getrennte Gas in den Hauptkreislauf zwischen den Kondensator (21) und die Rückführungsvorrichtung (43, 45, 47) von Gas in den Extraktor (3) zurückzuführen.

## Claims

1. Process for the extraction of at least one constituent present in a substance by means of an extraction fluid constituted by a supercritical fluid or a pressurized liquid comprising contacting said substance with said fluid in an extractor at a temperature T and a pressure p adequate for dissolving the constituent or constituents in said fluid, then separating the constituent or constituents extracted in said

13

fluid, characterized in that the separation process of said extracted constituent or constituents comprises a first stage consisting of expanding the fluid leaving the extractor at a pressure $p_1$ below pressure p, whilst maintaining it at the desired temperature to obtain said fluid in the gaseous state and part of said extracted constituent or constituents in the liquid state and separating the constituent or constituents in the liquid state from said fluid in the gaseous state and a second stage consisting of liquefying the fluid in the gaseous state separated in this way, rectifying the thus liquefied fluid for concentrating the extracted constituent or constituents in the liquid phase and treating the liquid phase to recover the constituent or constituents by carrying out the liquefaction and rectification operations in a gas separator-liquefier (13) linked by its upper part with a vertical column (19) surmounted by a condenser (21), so as to wash the gaseous phase discharged by said column by means of the condensed fluid.

2. Process according to claim 1, characterized in that the liquefied phase liquefaction operation takes place by raising the upper layer of the liquefied phase present in the separator-liquefier to a slightly higher temperature.

3. Process according to either of the claims 1 and 2, characterized in that it comprises a first continuous extraction and separation phase of the constituent or constituents consisting of expanding the fluid leaving the extractor at a pressure $p_1$ below the extraction pressure p whilst maintaining it at the desired temperature to obtain said fluid in the gaseous state and part of said constituent or constituents in the liquid state, separating said fluid in the gaseous state from the constituent or constituents in the liquid state and recycling into the extractor the thus separated fluid in the gaseous state after bringing it to extraction pressure p and extraction temperature T and a second final phase consisting of subjecting all the fluids circulating in the extractor to the two-stage separation process according to any one of the claims 1 and 2.

4. Process according to any one of the claims 1 to 3, characterized in that said constituents are recovered in the liquefied phase by subjecting the latter to an evaporation.

5. Process according to any one of the claims 1 to 4, characterized in that said fluid is carbon dioxide gas and in that the pressure $p_1$ is 3 to 6 MPa (30 to 60 bars).

6. Process according to any one of the claims 1 to 5, characterized in that the temperature T is above the critical temperature and the pressure p is above the critical pressure.

7. Process according to any one of the claims 1 to 6, characterized in that the material is Lavandin solid.

8. Apparatus for the extraction of at least one of the constituents present in a substance by means of an extraction fluid constituted by a supercritical fluid or a pressurized liquid, comprising an extractor (3) within which can be placed said substance, means (9) for circulating the extraction fluid in said extractor under pressure p and temperature T conditions adequate for dissolving the constituent or constituents of the substance in said fluid and a discharge pipe (7) for the extraction fluid leaving the extractor equipped with a relief valve (5) and, characterized in that said pipe (7) is connected to the lower part of a gas separator-liquefier (13) provided with cooling means (15, 17) linked by its upper part with a vertical column (19) surmounted by a condenser (21), said gas separator-liquefier (13) being provided in its lower part with means (14) for withdrawing a liquefied phase present in said separator-liquefier and in that a gas — liquid separator (41) is interposed on the gas circuit between the relief valve (5) and the gas separator-liquefier (13).

9. Apparatus according to claim 8, characterized in that the cooling means (15, 17) of said gas separator-liquefier make it possible to cool the lower part thereof to a temperature below that of its upper part.

10. Apparatus according to either of the claims 8 and 9, characterized in that condenser (21) located at the upper end of column (19) is surmounted by a heat exchanger (21) for raising the gas leaving the condenser to a higher temperature.

11. Apparatus according to claim 8, characterized in that the gas-liquid separator (41) is a cyclone separator.

12. Apparatus according to any one of the claims 8 to 11, characterized in that it comprises: a closed main circuit having in series the extractor (3), the said relief valve (5), a gas-liquid separator (41) and means (43, 45, 47) for recycling the gas leaving said separator (41) into said extractor (3) at the extraction temperature T and pressure p and a gas separator-liquefier (13) linked by its upper part with a vertical column (19) surmounted by a condenser (21), said gas separator-liquefier (13) being branched on to the main circuit by means of a pipe (51) having a valve (53) issuing into said main circuit between the gas-liquid separator (41) and said means (43, 45, 47) for recycling the gas into the extractor (3).

13. Apparatus according to any one of the claims 8 to 11, characterized in that it comprises: a closed main circuit having in series the extractor (3), said relief valve (5), the gas-liquid separator (41) and means (43, 45, 47) for recycling the gas leaving said separator (41) into said extractor (3) at extraction temperature T and pressure p, a gas separator-liquefier (13) linked by its upper part with a vertical column (19) surmounted by a condenser (21), means for continuously discharging into a container (61) the liquid phase separated in said gas-liquid separator (41) and means for connecting the upper part of the container (61) to the gas liquefier-separator (13) in order to treat therein the gas able to pass from the liquid — gas separator (41) into the container (61).

14. Apparatus according to any one of the claims 8 to 11, characterized in that it comprises: a closed main circuit having in series the extractor (3), said relief valve (5), a gas-liquid separator (41), a gas separator-liquefier (13) linked by its upper part with a vertical column (19) surmounted by a condenser (21)

**EP 0 238 527 B1**

and means (43, 45, 47) for recycling the gas leaving said condenser (21) into the said extractor (3) at the extraction temperature T and pressure p, means (14) for discontinuously sampling the liquid phase present in the gas separator-liquefier (13), means (71) for evaporating the sampled liquid phase and means (75, 77) for recycling the gas separated during the evaporation of the liquid phase sampled in the main circuit between the condenser (21) and the means (43, 45, 47) for recycling the gas into the extractor (3).

FIG. 1

FIG. 6

FIG. 2

FIG. 3

FIG. 4

FIG. 5

3